(19) Europäisches Patentamt
European Patent Office
Office européen des brevets

(11) **EP 3 236 147 A2**

(12) **EUROPEAN PATENT APPLICATION**
published in accordance with Art. 153(4) EPC

(43) Date of publication:
**25.10.2017 Bulletin 2017/43**

(51) Int Cl.:
**F22B 1/02** (2006.01)   **F28D 7/00** (2006.01)

(21) Application number: **15866988.7**

(86) International application number:
**PCT/RU2015/000788**

(22) Date of filing: **09.12.2015**

(87) International publication number:
**WO 2016/093739 (16.06.2016 Gazette 2016/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.12.2014 RU 2014150430**

(71) Applicant: **Joint Stock Company "Experimental And Design Organisation "Gidropress" Awarded The Order of The Red Banner of Labour And Czsr Order of Labour Podolsk, Moskovskaya obl. 142102 (RU)**

(72) Inventors:
• **LAKHOV, Dmitriy Aleksandrovich Podolsk Moskovskaya obl. 142100 (RU)**
• **SAFRONOV, Aleksey Vladimirovich Podolsk Moskovskaya obl. 142100 (RU)**

(74) Representative: **Friese Goeden Patentanwälte PartGmbB Widenmayerstraße 49 80538 München (DE)**

(54) **HORIZONTAL STEAM GENERATOR FOR A NUCLEAR POWER STATION AND METHOD FOR ASSEMBLING SAME**

(57)    This invention relates to steam generators, and more particularly to horizontal steam generators for nuclear power plants with a water-water energetic reactor (VVER). We claim a horizontal nuclear power plant steam generator comprising a cylindrical vessel, two elliptical bottoms, at least one feed water supply and steam removal connection pipe, an inlet header and an outlet header, a heat-exchange tube bundle connected to the same, wherein number Ntb of heat-exchange tubes in the bundle is selected depending on outer diameter dtb of the heat exchange tubes as follows: if dtb ≤ 14 mm:

$$\frac{1.944 \cdot 10^6}{\pi \left(\frac{4 \cdot dtb}{5} + 0.8\right)^2} \leq Ntb \leq \frac{1.211 \cdot 10^6}{\pi \cdot dtb}$$

if dtb > 14 mm:

$$\frac{1.944 \cdot 10^6}{\pi \left(\frac{4 \cdot dtb}{5} + 0.8\right)^2} \leq Ntb \leq \frac{1.111 \cdot 10^7}{\pi \cdot \left(\frac{4 \cdot dtb}{5} + 0.2\right)^2}$$

and the gap between the adjacent heat-exchange tubes in the vertical direction does not exceed the vertical spacing between the heat-exchange tubes in the bundle.
The technical result of the invention is an increased heat transfer efficiency in the steam generator with a limited number and maximum length of heat exchange tubes, which allows to use tubes employed in the industry.

EP 3 236 147 A2

**FIG. 2**

**Description**

The invention relates to steam generators, and more particularly to horizontal steam generators for nuclear power plants.

Since the development of reactor plants for nuclear power plants with water-cooled water-moderated power reactors (VVER), two approaches to steam generator design have been developed: vertical and horizontal steam generators. In the first case, a steam generator has a vertical pressure vessel and vertical U-shaped heat-exchange tubes embedded in a horizontal tube sheet. In the second case, a steam generator has a horizontal pressure vessel and horizontal heat-exchange tubes embedded in vertical inlet and outlet headers of the primary circuit coolant. Currently, the both design concepts have finally evolved into well-established but different technological trends.

This invention relates to generally horizontal steam generators for nuclear power plants (the "steam generator"), for example, to steam generators as disclosed in International Application WO9320386 (issued on 10/14/1993, IPC F22B1/02) and International Application WO9320385 (issued on 10/14/1993, IPC F22B1/02), and does not relate to vertical steam generators.

Horizontal steam generators has the following known design-specific features:

- moderate steam load allows to apply a simple separation scheme while reliably ensuring the required water content of steam,
- moderate medium flow rate in the secondary circuit eliminates the vibration hazard in the heat-exchange tubes and other elements of the steam generator,
- the vertical cylindrical inlet and outlet headers of the primary circuit prevents accumulation of sludge deposits on their surfaces and thus reducing the hazard of corrosive damage of heat-exchange tubes in areas of their insertion in the said headers,
- increased supply of water in the secondary circuit increases reliability of reactor cooldown through the steam generator in case the emergency feed water system is used, and the accumulating capacity of such steam generator mitigates reactor plant transient modes,
- application of the multistage evaporation principle allows to maintain a low concentration of dissolved impurities in the critical areas of the steam generator, which substantially improves the its operation reliability in terms of corrosion,
- the horizontal position of the heat-exchange surface provides reliable natural medium circulation in the primary circuit even when the water mass level is below the upper rows of heat-exchange tubes,
- favorable conditions for primary circuit coolant natural circulation in emergency conditions are provided,
- convenient access to the heat-exchange tube bundle is provided for maintenance and control both from the primary and secondary circuit sides. There are no heat-exchange tubes in the lower steam generator pressure vessel, where sludge may be deposited and accumulate, therefore, in case of accumulation of corrosive impurities in the lower part of the steam generator pressure vessel, sludge can be flushed through the specially designed blowdown system and nozzles.

The prior art discloses horizontal steam generators that are not designed for nuclear industry application, but have a number of significant features consistent with those of the steam generators applied at nuclear power plants. For example, the steam generator disclosed in Application EP1927809 (issued on 6/4/2008, IPC F22B1/18, F22B21/02). The steam generator has a drum-shaped pressure vessel. The longitudinal axis of the vessel is generally horizontal. The vessel accommodates hollow tubes grouped into sections and arranged mostly in parallel to one another, and secured in a supporting frame. Similar solutions are disclosed in Application JPH06300201 (issued on 10/28/1994, IPC F22B1/16, F28F9/24) and Patent CN203384952 (issued on 1/8/2014, IPC F22B1/16). In the above designs, a vertical tube sheet is used for heat-exchange tube embedding. Application of a tube sheet in a horizontal steam generator design has disadvantages due to high specific amount of metal per structure, manufacturing complexity, complexity of provision of leaktightness of the heat-exchange tube connection to the tube sheet and potential accumulation of sludge on the tube sheet surface, which activates the corrosion processes.

The said drawbacks can be compensated through the exclusion of the tube sheet, and its replacement by vertical inlet and outlet primary circuit coolant headers approximately cylindrical in shape in the horizontal steam generator design.

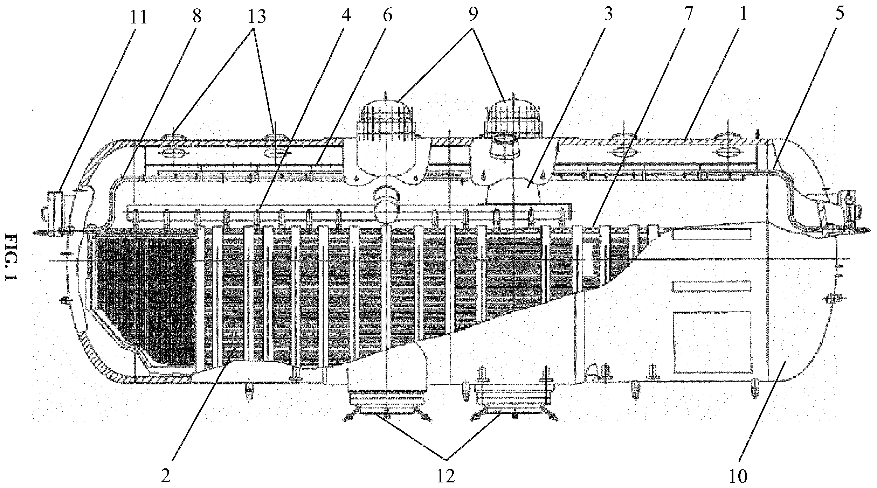

For example, the above International Application WO9320386 discloses a horizontal steam generator designed for nuclear industry comprising a cylindrical vessel with a longitudinally-oriented horizontal axis. The vessel houses a heat-exchange tube bundle arranged with a gap in vertical filling as shown in Fig. 1 of the patent description. Feed water distribution pipes are placed in the gap between the heat-exchange bundle tubes. The ends of the heat-exchange bundle tubes are fixed in holes in the side walls of the vertical primary circuit coolant headers. The feed water supply connection pipe opening is connected to a distribution device connected to the pipeline with its bending point at the horizontal level of the upper edge of the feed water supply opening inlet part. The technical solution is aimed to improve the uniformity of the heat load on the heat transfer surface in order to avoid corrosion cracking of the coolant header and feed water supply pipes. However, the availability of a gap in vertical heat exchange bundle filling significantly reduces the number of heat-exchange tubes that can be fit in the steam generator vessel, which, in its turn, reduces the heat-exchange surface output and margin, thus decreasing the steam generator reliability.

The closest analog of the claimed invention is the steam generator disclosed in patent RU30928 (issued on 7/10/2003, IPC F22B1/02). This steam generator comprises a vessel, inlet and outlet headers with a horizontal in-line heat-exchange tube bundle connected to the same and equipped with spacing devices and divided into banks with vertical intertubular tunnels between them. Horizontal heat-exchange tubes are installed at a horizontal and vertical relative spacing of $(1.44 \div 1.55) \cdot d$ and $(1.35 \div 1.40) \cdot d$ respectively, where d is the heat-exchange tube diameter. This technical solution allows to select a spacing for heat-exchange tubes, but it does not limit the length or the number of heat-exchange tubes in the steam generator sufficient to provide an effective level of heat transfer from the primary to the secondary circuit coolant of a VVER NPP.

Another subject of this invention is the method of assembly of a horizontal steam generator for nuclear power plants.

Patent RU100590 (issued on 12/20/2010, IPC F22B37/00) discloses a horizontal steam generator assembly method including manufacture of a vessel from forged steel shells with an elliptical bottom welded to each and comprising a ferrule with a flat lid with the selected ratio of the average ferrule height to the ferrule inner diameter is between 0.9 and 0.1. This technical solution is designed to reduce steam generator dimensions for facilitating its delivery from the manufacturing plant to its place of assembly and increasing the free space in the steam generator box. The longitudinal dimension is reduced due to a shorter ferrule, but not a change in the steam generator pressure vessel length.

The closest analog of the proposed method of horizontal steam generator assembly is the method described in book "Steam Generator Units of Nuclear Power Plants". (N. G. Rassokhin, Moscow, Energoatomizdat, 1987, pp. 65-68). The said method requires manufacturing a steam generator welded cylinder steel vessel of forged shells, two pressed elliptical bottoms, an inlet header and an outlet header of the primary circuit coolant, feed water and chemical reagent headers, and other vessel internals, as well as a bundle of U-shaped heat-exchange tubes. During steam generator assembly, first, vertical headers are to be installed in the vessel and secured by welding, then supports for a tube bundle are to be installed, a heat-exchange tube bundle is to be formed, other vessel internals are to be mounted and, finally, the elliptical bottoms are to be welded to the vessel. The most labor-consuming operation during steam generator manufacture, from the technological point of view, is the connection of a heat-exchange tube bundle to primary circuit coolant headers involving drilling a large number of closely spaced deep holes on a limited area of the header side wall followed by leak-tight insertion of heat-exchange tubes in the same. A large number of closely spaced deep holes reduces the strength of the header, and limits the number of heat-exchange tubes that can be placed in the steam generator.

The purpose of this invention is to design a steam generator meeting the requirements to the reliability and ease of manufacturing with an increased output while maintaining the overall dimensions and ensuring the best boiler water circulation speed between the heat transfer tubes.

The technical result of the invention is efficient heat transfer in the steam generator with a limited number and maximum length of heat exchange tubes.

Limitation of the maximum length of heat-exchange tubes allows to use tubes employed in the industry to form a heat-exchange surface of the steam generator. The problem is that heat-exchange tubes for NPP steam generators are manufactured with seamless stainless steel pipes, for example, cold-drawn or hot-rolled pipes with a length from 10 to 15 m. Currently, manufacture of seamless pipes longer than 30 to 40 m is not employed in the industry, which imposes a limitation on the manufacture of steam generators with longer heat-exchange tubes. Use of welded pipes to form a heat-exchange surface of a steam generator is unacceptable due to reliability considerations.

Steam generator output depends on its heat-exchange surface that, in its turn, is determined by selecting an outer diameter and a number of tubes in heat-exchange tube bundle. On the one hand, reduction of the tube outer diameter and increase of their number allows to ensure ease of manufacturing of the steam generator due to the use of shorter tubes employed in the industry. On the other hand, this results in reduction of the coolant flow speed in the tubes, heat transfer efficiency and technical and economic performance of steam generators. Consequently, manufacture of NPP steam generators faces the problem of choosing the ratio between the number of heat-exchange tubes and their diameter.

To solve the problem at hand, we claim a horizontal nuclear power plant steam generator comprising a cylindrical vessel, two elliptical bottoms, at least one feed water supply and steam removal connection pipe, an inlet header and an outlet header of the primary circuit coolant, a heat-exchange tube bundle connected to the same, characterized by number $N_{tb}$ of heat-exchange tubes in the bundle selected depending on outer diameter $d_{tb}$ of the heat exchange tubes as follows:

if $d_{tb} \leq 14$ mm:

$$\frac{1.944 \cdot 10^6}{\pi \left(\frac{4 \cdot dtb}{5} + 0.8\right)^2} \le Ntb \le \frac{1.211 \cdot 10^6}{\pi \cdot dtb}$$

if dtb > 14 mm:

$$\frac{1.944 \cdot 10^6}{\pi \left(\frac{4 \cdot dtb}{5} + 0.8\right)^2} \le Ntb \le \frac{1.111 \cdot 10^7}{\pi \cdot \left(\frac{4 \cdot dtb}{5} + 0.2\right)^2}$$

In the claimed steam generator design, the heat-exchange tubes fill the heat-exchange tube bundle from the bottom upwards at a uniform spacing without gaps, and gap size b between the adjacent heat-exchange tubes in the vertical direction does not exceed the vertical spacing between the heat-exchange tubes in the bundle.

The component density of tubes in a heat-exchange bundle is calculated based on the ratio between the clear area of a heat-exchange tube and the heat-exchange tube bundle installation area per tube. In the claimed invention, the ratio between the clear area of a heat-exchange tube and the heat-exchange tube bundle installation area per tube in the heat-exchange bundle is selected based on the following criterion:

$$0.1 \le \frac{S_{tb}}{ftb} \le 0.8$$

where:

$S_{tb}$ is the clear area of a heat-exchange tube, mm$^2$,
$f_{tb}$ is the heat-exchange tube bundle installation area per tube, mm$^2$.

Clear area of a heat-exchange tube $S_{tb}$ can be calculated from the following ratio: $Stb = \frac{\pi(dtb - 2 \cdot \delta)^2}{4}$, where

$\delta$ is the heat-exchange tube thickness, mm,
dtb is the heat-exchange tube diameter, mm.

Heat-exchange tube bundle installation area per tube $f_{tb}$ can be calculated from the following ratio:

$$ftb = \frac{S_V \cdot S_H}{k}, \text{ where}$$

where

$S_v$ and $S_h$ is the vertical and horizontal spacings of arrangement of tubes in a bundle, mm,
k is the arrangement identifier of heat-exchange tubes in a bundle (k=1 for in-line arrangement and k=2 for staggered arrangement),

$$\frac{S_{tb}}{ftb} = \frac{\pi(dtb - 2\delta)^2 k}{4 \cdot S_V \cdot S_H}$$

Compliance with this criterion ensures advantages of the claimed steam generator, as in combination with the criteria of limited heat exchange tube number and length it reduces specific amount of metal per structure of the steam generator and at the same time provides a reliable circulation of the boiler water (secondary circuit coolant, working medium).

Seamless solid-drawn pipes of austenitic stainless steel, in particular, chrome-nickel austenitic stainless steel 08Cr18Ni10Ti, are used as heat-exchange tubes in a heat-exchange bundle of the steam generator.

The task at hand in relation to the claimed method is solved owing to the fact that the nuclear power plant horizontal steam generator assembly method includes manufacture of a cylindrical vessel, two elliptical bottoms, at least one feed water supply and steam removal connection pipe, an inlet header and an outlet header of the primary circuit coolant, heat-exchange tubes with outer diameter dtb and in number Ntb, operations for installation and welding of the headers, heat exchange tube supports to the vessel, forming of a heat-exchange tube bundle and their connection to the inlet and outlet headers of the primary circuit coolant, as well as installation and welding of the bottoms to the vessel. The heat-exchange tube bundle is formed so as to provide vertical gaps b between the adjacent heat-exchange tubes does not exceed vertical spacing Sv between the heat-exchange tubes and number Ntb of the heat-exchange tubes in the bundle is selected depending on outer diameter dtb of a heat exchange tube as follows:

if dtb ≤ 14 mm:

$$\frac{1.944\cdot10^6}{\pi\left(\frac{4\cdot dtb}{5}+0.8\right)^2} \leq \text{Ntb} \leq \frac{1.211\cdot10^6}{\pi\cdot dtb}$$

if dtb > 14 mm:

$$\frac{1.944\cdot10^6}{\pi\left(\frac{4\cdot dtb}{5}+0.8\right)^2} \leq \text{Ntb} \leq \frac{1.111\cdot10^7}{\pi\cdot\left(\frac{4\cdot dtb}{5}+0.2\right)^2}$$

where dtb is in mm.

The combination of such properties as heat-exchange tube number Ntb depending on their outer diameter dtb, filling of the bundle with heat-exchange tubes continuously from the bottom upwards with gaps in the bundle not exceeding the vertical spacing of heat-exchange tubes in the bundle as well as relation $\frac{S_{tb}}{ftb}$ and number of heat exchange tubes Ntb in a specific steam generator design with the value allowing, on the one hand, to ensure an acceptable coolant flow velocity in heat-exchange tubes, ease of manufacturing and installation of heat exchanger tubes, and, on the other hand, to provide the heat transfer coefficient characteristic of the steam generator, sustain the temperature head selected for steam generators with power range between 230 MW and 850 MW and coolant flow through the steam generator from about 10,000 to 30,000 m$^3$/hr.

Before installation of the primary circuit inlet and outlet headers into the steam generator vessel, through holes are drilled in the side surface of each header in accordance with the number of heat-exchange tubes in the bundle, Ntb=Nhl. The number of holes in the side surface of the primary circuit coolant header shall be selected according to the header strength retention criteria. If required, the header strength may be improved by increase of thickness of its side wall and the header diameter. To ensure the strength of the perforated part of the header, the distance between edges of the adjacent holes shall be not less than 5.5 mm along the inner surface of the side wall.

The heat-exchange tubes are secured in the side surface of the primary circuit header by round-welding of the tube ends on the inner surface of the headers, followed by hydraulic expansion of the heat-exchange tubes over wall thickness of the headers and mechanical curling near the external surface of the headers until the of gap between the headers and the heat-exchange tubes is closed.

The heat-exchange tubes are bundled directly in the vessel from the bottom upwards.

Seamless solid-drawn austenitic stainless steel tubes not longer than 30 m are used as heat-exchange tubes.

A possible embodiment of the claimed horizontal steam generator and its assembly method is detailed below with references to figures.

Fig. 1 shows the general view of the steam generator.
Fig. 2 shows the sectional view of the steam generator from the elliptical bottom.
Fig. 3 shows the heat-exchange tubes with spacing elements.

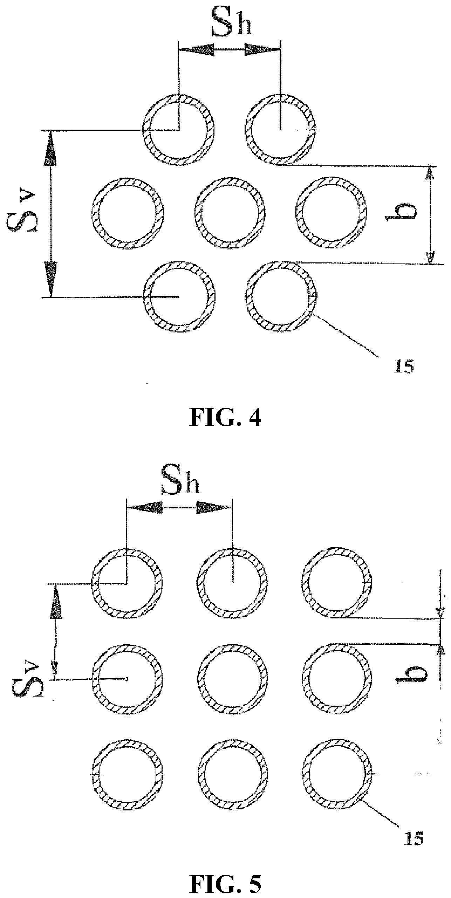

Fig. 4 shows the cross-section of staggered arrangement of heat-exchange bundle tubes.
Fig. 5 shows the cross-section of in-line arrangement of heat-exchange bundle tubes.
Fig. 6 shows the arrangement of baffles separating heat-exchange tube banks.

A steam generator is a horizontal vessel heat-exchange unit designed for arrangement of a submerged heat transfer surface in the same consisting of the following structural elements shown in the attached figures: a vessel 1, a heat-exchange tube bundle 2 (also referred to as tube bundle), inlet and outlet headers 3 of the primary circuit coolant, a feed water supply and distribution device 4, an emergency feed water supply and distribution device 5, an overhead perforated sheet 6, a submerged perforated sheet 7, a chemical reagent supply device 8.

The vessel 1 is a component part of the steam generator, it accommodates inlet and outlet headers 3 of the primary circuit, a heat-exchange surface in the form of heat-exchange tube bundle 2 and vessel internals. The vessel 1 accommodates secondary circuit manholes 9 for servicing of primary circuit inlet and outlet headers 3.

The vessel 1 is a horizontally elongated welded cylinder container with elliptical bottoms 10 with manholes 11 for access to the secondary circuit volume positioned on them welded to its both ends.

The vessel 1 also contains primary circuit coolant supply and removal connection pipes 12, steam removal connection pipes 13 feed water supply connection pipes 14 and other connection pipes and access manholes.

Headers 3 of the primary circuit coolant are thick-walled cylinders of varying diameters and thickness. They are made of high-strength pearlite grade steel, and their internal surfaces have a protective anti-corrosion build-up. The central cylinder part of headers 3 has perforations for fastening the ends of heat-exchange tubes 15. The upper part of headers 3 has a split for access inside through manholes 9 of the secondary circuit.

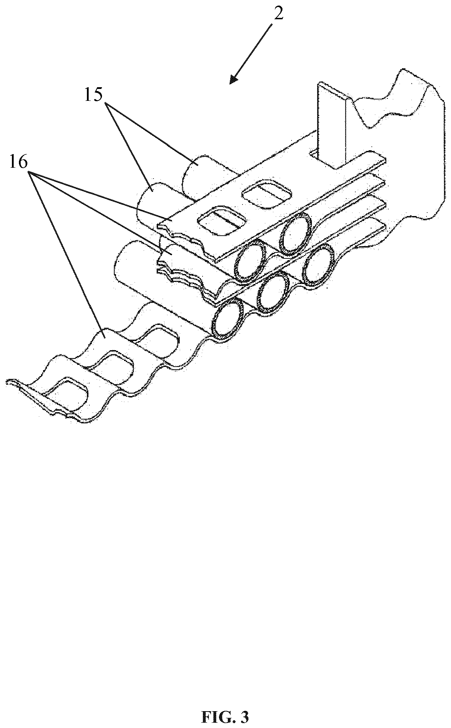

The heat-exchange surface of the steam generator is formed by seamless solid-drawn heat-exchange tubes (15) made of austenitic stainless steel. Heat-exchange tubes are formed into U-shaped coils arranged in bundle 2 and installed with a slope towards headers 3 in order to provide possibility of complete draining of heat-exchange tubes 15. Heat-exchange tubes 15 are fixed in headers 3 by counter welding of the ends with the internal surface of the headers 3. Hydraulic expansion of heat-exchange tubes 15 is performed over wall thickness of the headers 3 with mechanical curling near the external surface of the headers 3 until the of gap (split) between the headers 3 and the heat-exchange tubes 15 is closed. Heat-exchange tubes 15 are installed at certain intervals from one another (spaced in bundle 2) using spacing elements 16, such as wave-shaped bands and flat plates (Fig. 3). This fixing structure allows the heat-exchange tubes 15 to move during thermal expansion.

Internal devices located in the vessel 1 include the following:

- feed water supply and distribution device 4 located above heat-exchange tube bundle 2. The said device 4 consists of pipelines and distributing pipes with orifices for feed water removal along their full length. The main material used for manufacture of the above device is stainless steel,
- emergency feed water supply and distribution device 5 located in the steam space and consisting of a header and distributing pipes with orifices for feed water removal along their full length, The material used for its manufacture is stainless steel,
- device 8 for chemical reagent supply during steam generator flushing located in the steam space and consisting of a header with orifices for chemical reagent removal along its full length. The material used for its manufacture is stainless steel,
- overhead perforated sheet 6 located in the upper part of the steam generator and designed to decrease the header effect during steam removal from the steam generator. The material used for its manufacture is stainless steel,
- submerged perforated sheet 7 with alternating perforation located above the heat-exchange tube bundle 2 and designed to level the evaporation surface steam load. The material used for its manufacture is stainless steel.

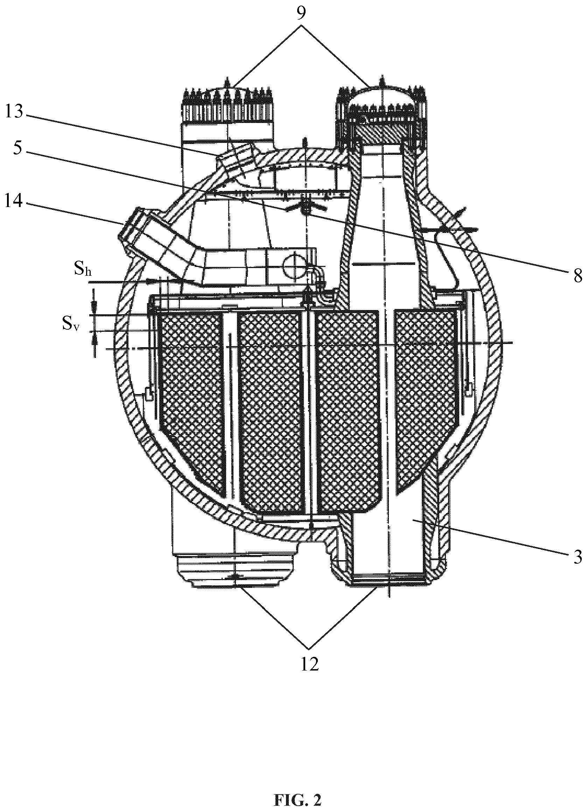

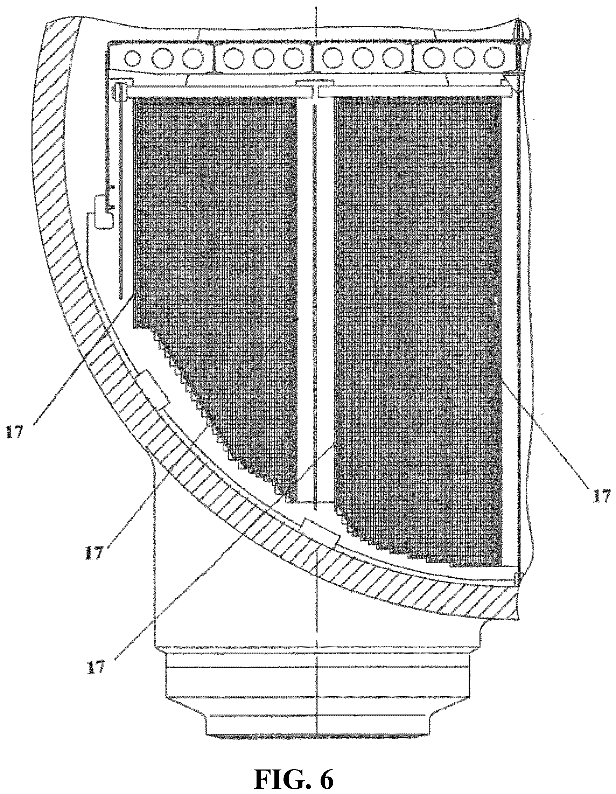

To improve boiler water (secondary circuit coolant) circulation, the heat-exchange bundle tubes of the steam generator can be grouped into banks separated from each other by vertical intertubular tunnels shown in Fig. 2 and Fig. 6. Besides, as shown in Fig. 6, the banks of heat-exchange bundle tubes of the steam generator can be separated along their sides by baffles 17 forming riser and downtake sections of boiler water circulation. In this case, the steam generated between the heat-exchange tubes does not reach the intertubular tunnels and does not prevent colder boiler water from moving downwards. Boiler water circulation becomes more intensive.

In another embodiment, the baffles forming the boiling water riser and downtake sections can close only the heat-exchange tube banks located on the primary circuit coolant inlet header side. The above baffles are made of metal sheets without perforation.

The operation principle of the steam generator structure is as follows. Coolant heated in reactor is supplied to the inlet or distributing header of the primary circuit coolant (one of headers 3). From the distributing header, the coolant is fed to heat-exchange tubes 15 grouped into a bundle 2, moves through them transferring the heat through the heat-exchange surface wall to the boiler water, and is collected in the outlet or collecting header of the primary circuit coolant (the other header 3). The coolant is returned to the reactor from the collector header by a circulating pump. The steam generator vessel 1 is filled with boiler water to a certain level which is to be maintained during operation. Feed water is supplied to the steam generator by the feed water supply and distribution device 4. The feed water flowing out of it is mixed with the boiler water and heated to the saturation temperature. The heat transferred from the coolant is spent on boiler water evaporation and steam generation in the intertubular space of the steam generator. The generated steam is ascending to the separation part of the steam generator comprising a free volume, separation devices or a combination thereof. After passing the separation part of the steam generator, the steam has the design rated humidity. Then it is removed from the steam generator through steam removal devices comprising steam removal connection pipes 13 and overhead perforated sheets 6 installed in front of them. The steam generated by the steam generator is used in steam-power process cycle of electric power generation.

In the general case, an emergency feed water supply and distribution device 5, a chemical reagent supply device 8, an overhead perforated sheet 6, a submerged perforated sheet 7 are optional (not obligatory) components of a steam generator. They are required to improve the steam generator operation reliability, durability, etc., and may either included or not in different horizontal steam generator structures. An emergency feed water supply and distribution device 5 is used to supply water to the steam generator if the main feed water line is damaged and during cooldown of the reactor plant through the secondary circuit in case of a design basis accident. A chemical reagent supply device 8 is used during regular flushing of the steam generation for removal of the accumulated depositions and corrosion products. This device is used to supply chemical reagents to the steam generator. A submerged perforated sheet 7 is used to level the steam load in the steam generator steam space. This is required to provide separation parameters of the steam generation and is only relevant for high-power steam generators. An overhead perforated sheet 6 is used to form an even profile of steam velocities in the steam generator steam space by creating resistance on its way, which is required to provide reliable steam separation in the steam generator.

A horizontal steam generator for a nuclear power plant is assembled as follows: A cylindrical vessel 1 of the steam generator is manufactured from a set of steel shells, followed by its heat treatment and machining. Elliptical bottoms (11), a feed water supply and distribution device (4), steam removal connection pipes (13), inlet and outlet headers (3), U-shaped heat-exchange tubes (15) with outer diameter dtb in quantity Ntb are manufactured. Then the welded vessel is installed onto the supports. Holes are drilled and tooled in the side surface of the inlet and outlet headers, then headers are installed inside the steam generator vessel and secured by welding. Supports for the coolant tube bundle are installed and a bundle 2 of heat-exchange tubes is formed directly in the vessel in rows from the bottom upwards. Each tube is secured in the coolant header, curled and welded from the inner side of the header. Other internals are installed. The elliptical bottoms 11 are installed and welded onto the vessel 1. The following devices may also be installed in the vessel: an emergency feed water supply and distribution device 5, a chemical reagent supply device 8, an overhead perforated sheet 6, and a submerged perforated sheet 7. These elements are optional for the steam generator, however, as it was mentioned above, they are designed to improve steam generator operation, in particular, to increase the operation reliability.

The heat-exchange tube bundle 2 is formed so that it is filled with heat-exchange tubes 15 continuously from the top downwards. Spacing elements 16 ensure gaps in the heat-exchange tube bundle 2 that do not exceed the vertical spacing of heat-exchange tubes 15 in the bundle 2.

Number Ntb of the heat-exchange tubes is selected depending on outer diameter dtb of a heat-exchange tube based on the relations above. On the one hand, reduction of the outer diameter with a simultaneous increase in the number of tubes and with gaps between the heat pipes not exceeding the vertical spacing in the bundle increases the heat transfer surface, and, as a result, the steam generator output. On the other hand, it is necessary to ensure reliable circulation of the boiler water (secondary circuit coolant) between the heat-exchange bundle tubes

Example 1.

A steam generator with the following parameters is manufactured:

- thermal power Q=750 MW,
- coolant flow rate G=22,000 $m^3$/h,
- heat-exchange surface area H=6000 $m^2$,
- heat-exchange tube outer diameter dtb = 21 mm and wall thickness $\delta$ = 1.5 mm,
- coolant pressure P=16 MPa,
- tube arrangement is staggered (k=1),
- vertical and horizontal spacing of tubes in a bundle Sv=Sh=36 mm

According to the claimed technical solution, the lower acceptable limit of the number of heat-exchange tubes that can be fitted into the vessel of this steam generator is:

$$\frac{1.944 \cdot 10^6}{\pi \left(\frac{4 \cdot dtb}{5} + 0.8\right)^2} = \frac{1.944 \cdot 10^6}{\pi \cdot \left(\frac{4 \cdot 21}{5} + 0.8\right)^2} = 1988.$$

The upper acceptable limit of the number of heat-exchange tubes that can be fitted into the vessel of this steam generator is:

$$\frac{1.111 \cdot 10^7}{\pi \left(\frac{4 \cdot dtb}{5} + 0.2\right)^2} = \frac{1.111 \cdot 10^7}{\pi \cdot \left(\frac{4 \cdot 21}{5} + 0.2\right)^2} = 11,417.$$

Let us compare the coolant flow velocity W (m/s) for a steam generator design with a number of heat-exchange tubes within the derived range 1988 ≤ Ntb ≤ 11,417, and that for a steam generator with a number of heat-exchange tubes outside the derived range.

$$W = \frac{G}{\frac{\pi}{4}(dtb - 2 \cdot \delta)^2 \cdot Ntb} = \frac{22,000}{3600 \cdot \frac{\pi}{4}(21 - 2 \cdot 1.5)^2 \cdot Ntb}$$

The coolant flow velocity for a steam generator with a number of heat-exchange tubes within the derived range will be as follows: 2.1 m/s ≤ W ≤ 12 m/s.

Let us calculate the coolant flow velocity for a steam generator with a number outside the set range 1988 ≤ Ntb ≤ 11,417.

For a number of heat-exchange tubes greater than the specified one, for example, for 13,000 heat-exchange tubes, the coolant flow velocity will be as follows:

$$W_{13,000} = 1.84 \text{ m/s}.$$

The example shows that the coolant flow velocity is very low and does not allow to ensure efficient heat transfer[1], therefore, the technical and economic performance of the steam generator with a number of heat-exchange tubes outside the set range will be worse than that of the claimed one.

If the number of heat-exchange tubes used in the steam generator design is less than the specified one, for example, 500 heat-exchange tubes, then $W_{500} = 48$ m/s. The said coolant flow velocity during steam generator operation will lead to severe erosive wear of heat-exchange bundle tubes and their frequent damage, which reduces the technical and economic performance of the steam generator.

Let us compare the required length of heat-exchange tubes Ltb for a steam generator design with the parameters specified in the example and a number of heat-exchange tubes within the set range 1988 ≤ Ntb ≤ 11,417, and that of a steam generator with a number of heat-exchange tubes outside the range.

Assuming that $\text{Ltb} = \frac{H}{\pi \cdot dtb \cdot Ntb}$, the range of tube length sufficient to manufacture a steam generator with a number of heat-exchange tubes within the preset range 1988 ≤ Ntb ≤ 11,417 will be:

$$7.97 \text{ m} \leq \text{Ltb} \leq 45 \text{ m}$$

It shall be further noted that to manufacture a steam generator according to the claimed invention, seamless solid-drawn austenitic stainless steel pipes with maximum length generally not more than 30 m are used. According to the metal industry development trends, it

[1] Data on the nominal coolant flow velocity can be found in the following book: "Hydrodynamic and Thermochemical Processes in Steam Generators of NPP with VVER" by: N. B. Trunov, S. A. Logvinov,U.G. Dragunov, Moscow, Energoatomizdat, 2001, p. 50, stating: "Practices in design of horizontal steam generators allow us to assume the optimal coolant flow velocity in pipes to be 4-6 m/s". can be expected that manufacture of seamless solid-drawn or hot-rolled tubes with a length up to 45 m will be possible in the foreseeable future.

For a given steam generator design with a number of heat-exchange tubes less than specified, for example, 500 heat exchange tubes, the required length of heat-exchange tubes will be: Ltb = 182 m.

Seamless 182 m long heat-exchange tubes are not available in the industry and their manufacture is not expected in the near future.

Example 2.

A steam generator with the following parameters is manufactured:

- thermal power Q=1000 MW,
- coolant flow rate G=36,000 m$^3$/h,
- heat-exchange surface area H=9000 m$^2$,
- heat-exchange tube outer diameter dtb = 12 mm and wall thickness $\delta$ = 1.1 mm,
- coolant pressure P= 17 MPa,

According to the claimed technical solution, the lower acceptable limit of the number of heat-exchange tubes that can be fitted into the vessel of this steam generator is:

$$\frac{1.944 \cdot 10^6}{\pi \left(\frac{4 \cdot dtb}{5} + 0.8\right)^2} = \frac{1.944 \cdot 10^6}{\pi \cdot \left(\frac{4 \cdot 12}{5} + 0.8\right)^2} = 6000.$$

The upper acceptable limit of the number of heat-exchange tubes that can be fitted into the vessel of this steam generator is:

$$\frac{1.211 \cdot 10^6}{\pi \cdot dtb} = \frac{1.211 \cdot 10^6}{\pi \cdot 12} = 32,000.$$

Let us compare the coolant flow velocity W (m/s) for a steam generator design with a number of heat-exchange tubes within the derived range $6000 \leq Ntb \leq 32,000$, and that for a steam generator with a number of heat-exchange tubes outside the derived range.

$$W = \frac{G}{\frac{\pi}{4}(dtb - 2 \cdot \delta)^2 \cdot Ntb} = \frac{22,000}{3600 \cdot \frac{\pi}{4}(12 - 2 \cdot 1.1)^2 \cdot Ntb}$$

The coolant flow velocity for a steam generator with a number of heat-exchange tubes within the derived range will be as follows: $4$ m/s $\leq W \leq 22$ m/s.
Let us calculate the coolant flow velocity for a steam generator with a number outside the set range $6000 \leq Ntb \leq 32,000$.
For a number of heat-exchange tubes greater than the specified one, for example, for 40,000 heat-exchange tubes, the coolant flow velocity will be as follows:

$$W_{40,000} = 3.3 \text{ m/s}.$$

The example shows that the coolant flow velocity is very low and does not allow to ensure efficient heat transfer, therefore, the technical and economic performance of the steam generator with a number of heat-exchange tubes outside the set range will be worse than that of the claimed one.
If the number of heat-exchange tubes used in the steam generator design is less than the specified one, for example, 4000 heat-exchange tubes, then $W_{4000} = 33$ m/s. The said coolant flow velocity during steam generator operation will lead to severe erosive wear of heat-exchange bundle tubes followed by plugging of the damaged tubes, which reduces the technical and economic performance of the steam generator.
Let us compare the required length of heat-exchange tubes Ltb for a steam generator design with the parameters specified in the example and a number of heat-exchange tubes within the set range $6000 \leq Ntb \leq 32,000$, and that of a steam generator with a number of heat-exchange tubes outside the range.

Assuming that $Ltb = \dfrac{H}{\pi \cdot dtb \cdot Ntb}$, the range of tube length sufficient to manufacture a steam generator with a number of heat-exchange tubes within the preset range $1988 \leq Ntb \leq 11,417$ will be:

$$7.46 \text{ m} \le \text{Ltb} \le 39 \text{ m}$$

For a given steam generator design with a number of heat-exchange tubes less than specified, for example, 4000 heat exchange tubes, the required length of heat-exchange tubes will be: Ltb = 59 m.

Seamless 59 m long heat-exchange tubes are not available in the industry, therefore, manufacture of NPP steam generators with heat-exchange tubes of the said length is not possible.

Example 3.

A steam generator is manufactured with the input parameters same as those in example 1, wherein the outer diameter of heat-exchange tubes is dtb = 21 mm and the wall thickness is $\delta$ = 1.5 mm. According to the claimed invention, number Ntb of heat-exchange tubes is selected from the range of between 1998 and 11,417 pcs. Clear area Stb of a heat-exchange tube will be:

$$Stb = \frac{\pi(dtb - 2 \cdot \delta)^2}{4} = 254.5 \text{ мм}$$

Heat-exchange tube bundle installation area ftb per tube in case of in-line arrangement (k = 1) and at equal vertical spacing $S_v$ and horizontal spacing $S_h$ (Fig. 2) of 36 mm will be:

$$ftb = \frac{S_V \cdot S_H}{k} = 1296 \text{ мм}^2$$

Then the relation between clear areas Stb and bundle installation area ftb will be:

$$\frac{S_{tb}}{ftb} = 0.2$$

Consequently, a heat exchange bundle cell formed by four adjacent tubes with *f*tb = 1296 mm² has 80% of its area available for circulation of the boiler water (secondary circuit coolant), which enables its unhindered flow.

Compliance with this criterion increases the technical and economical advantages of the claimed steam generator, as in combination with the criteria of limited heat exchange tube number and length it contributes to improvement of the steam generator operation reliability.

The latest relation also confirms that the claimed steam generator design has heat-exchange tube bundle filling the inner volume of the steam generator vessel at uniform spacing without filling gaps, and the gap between the adjacent heat-exchange tubes in the vertical direction does not exceed the vertical spacing between the heat-exchange tubes in the bundle.

**Claims**

1. A horizontal nuclear power plant steam generator comprising a cylindrical vessel, two elliptical bottoms, at least one feed water supply and steam removal connection pipe, an inlet header and an outlet header of the primary circuit coolant, a heat-exchange tube bundle connected to the same, wherein number Ntb of heat-exchange tubes in the bundle is selected depending on outer diameter dtb of the heat exchange tubes as follows:

   if dtb ≤ 14 mm:

$$\frac{1.944 \cdot 10^6}{\pi \left( \frac{4 \cdot dtb}{5} + 0.8 \right)^2} \le Ntb \le \frac{1.211 \cdot 10^6}{\pi \cdot dtb}$$

...

if dtb > 14 mm:

$$\frac{1.944 \cdot 10^6}{\pi \left(\frac{4 \cdot dtb}{5} + 0.8\right)^2} \leq Ntb \leq \frac{1.111 \cdot 10^7}{\pi \cdot \left(\frac{4 \cdot dtb}{5} + 0.2\right)^2}$$

and the gap between the adjacent heat-exchange tubes in the vertical direction does not exceed the vertical spacing between the heat-exchange tubes in the bundle.

2. A steam generator according to claim 1, wherein seamless solid-drawn austenitic stainless steel pipes are used as heat-exchange tubes.

3. A steam generator according to claim 1, wherein in the ratio between the clear area of a heat-exchange tube and the heat-exchange tube bundle installation area per tube in the heat-exchange bundle is selected based on the following criterion:

$$0.1 \leq \frac{S_{tb}}{ftb} \leq 0.8$$

where:

$S_{tb}$ is the clear area of a heat-exchange tube, $mm^2$,
$f_{tb}$ is the heat-exchange tube bundle installation area per tube, $mm^2$.

4. A steam generator according to claim 1, wherein the heat-exchange bundle tubes are grouped in banks separated by vertical intertubular tunnels.

5. A steam generator according to claim 4, wherein the heat-exchange tube banks are separated along their sides by baffles forming riser and downtake sections of boiler water circulation.

6. A steam generator according to claim 5, wherein the heat-exchange tube banks located on the inlet primary circuit coolant header side are separated along their sides by baffles forming riser and downtake sections of boiler water circulation.

7. An assembly method for a nuclear power plant horizontal steam generator including manufacture of a cylindrical vessel, two elliptical bottoms, at least one feed water supply and steam removal connection pipe, an inlet header and an outlet header of the primary circuit coolant, heat-exchange tubes with outer diameter dtb and in number Ntb, operations for installation and welding of the headers, heat exchange tube supports to the vessel, forming of a heat-exchange tube bundle and their connection to the inlet and outlet headers of the primary circuit coolant, as well as installation and welding of the bottoms to the vessel, wherein the heat-exchange tube bundle is formed so as to provide vertical gaps between the adjacent heat-exchange tubes does not exceed the vertical spacing between the heat-exchange tubes and number Ntb of heat-exchange tubes in the bundle is selected depending on outer diameter dtb of a heat exchange tube as follows:

if dtb ≤ 14 mm:

$$\frac{1.944 \cdot 10^6}{\pi \left(\frac{4 \cdot dtb}{5} + 0.8\right)^2} \leq Ntb \leq \frac{1.211 \cdot 10^6}{\pi \cdot dtb}$$

if dtb > 14 mm:

$$\frac{1.944 \cdot 10^6}{\pi \left(\frac{4 \cdot dtb}{5} + 0.8\right)^2} \leq Ntb \leq \frac{1.111 \cdot 10^7}{\pi \cdot \left(\frac{4 \cdot dtb}{5} + 0.2\right)^2}$$

8. A method according to claim 7, wherein before installation into the steam generator vessel, through holes are drilled in the side surface of the inlet and outlet headers in accordance with the number of heat-exchange tubes in the bundle (Ntb).

9. A method according to in claim 8, wherein the heat-exchange tubes are secured in the holes in the side surface of the primary circuit coolant header by round-welding of the tube ends on the inner surface of the headers, followed by hydraulic expansion of the heat-exchange tubes over wall thickness of the headers and mechanical curling near the external surface of the headers until the of gap between the headers and the heat-exchange tubes is closed.

10. A method according to claim 7, wherein the heat-exchange tubes are bundled directly in the vessel from the bottom upwards.

11. A method according to claim 7, wherein seamless solid-drawn austenitic stainless steel tubes not longer than 30 m are used as heat-exchange tubes.

FIG. 1

FIG. 2

2

15

16

16

FIG. 3

EP 3 236 147 A2

**FIG. 4**

**FIG. 5**

17

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9320386 A
- WO 9320385 A
- EP 1927809 A
- JP H06300201 B

- CN 203384952
- RU 30928
- RU 100590

### Non-patent literature cited in the description

- Steam Generator Units of Nuclear Power Plants. **N. G. RASSOKHIN.** Energoatomizdat. 1987, 65-68

- Hydrodynamic and Thermochemical Processes in Steam Generators of NPP with VVER. **N. B. TRUNOV ; S. A. LOGVINOV ; U.G. DRAGUNOV.** Energoatomizdat. 2001, 50